# EUROPÄISCHE PATENTSCHRIFT

(11) **EP 1 232 654 B1**
(45) Veröffentlichungstag und Bekanntmachung des Hinweises auf die Patenterteilung: **27.08.2008**
(21) Anmeldenummer: 00976073.7
(22) Anmeldetag: 24.11.2000
(51) Int. Cl.: H04Q 1/14

(54) **SYSTEMSEITIGES ANSCHLUSSMODUL UND VERTEILER DER TELEKOMMUNIKATIONSTECHNIK**
SYSTEM-SIDE CONNECTING MODULE AND DISTRIBUTOR FOR TELECOMMUNICATIONS TECHNOLOGY
MODULE DE CONNEXION COTE SYSTEME ET REPARTITEUR FAISANT PARTIE DE LA TECHNOLOGIE DES TELECOMMUNICATIONS

(30) Priorität: 25.11.1999 DE 29920712 U
(43) Veröffentlichungstag der Anmeldung: 21.08.2002
(73) Patentinhaber: QUANTE AG, 42109 Wuppertal (DE)
(72) Erfinder: OTTO, Hans-Dieter, 51688 Wipperfürth (DE); DENTER, Friedhelm, 44575 Castrop-Rauxel (DE); GAERTNER, Norbert, 42285 Wuppertal (DE); BURMEISTER, Klaus-Dieter, 42111 Wuppertal (DE)
(74) Vertreter: HOFFMANN EITLE
(86) Internationale Anmeldenummer: PCT/EP2000/011731
(87) Internationale Veröffentlichungsnummer: WO 2001/039516

(56) Entgegenhaltungen:
- EP-A- 0 493 740
- EP-A- 0 765 091
- DE-C- 4 306 349
- DE-U- 9 302 456

## Beschreibung

### Technisches Gebiet

Die Erfindung betrifft ein systemseitiges Anschlussmodul der Telekommunikationstechnik, das für den Anschluss der Adern eines Systemkabels einerseits und von Rangierkabeln andererseits vorgesehen ist.

Ein Verteiler der Telekommunikationstechnik besteht üblicherweise aus zwei Funktionsbereichen, nämlich der Linienseite zur Aufnahme von sogenannten Linienkabeln, die zu den einzelnen Telekommunikationsteilnehmern führen. Der zweite Funktionsbereich eines Verteilers wird als Systemseite bezeichnet und dient dem Anschluss der Systemkabel, die zu Vermittlungseinrichtungen oder sonstigen erforderlichen Einrichtungen führen. Zwischen den Modulen der Linien- und der Systemseite sind Rangierungen ausgebildet, um die auf beiden Seiten vorgesehenen Leitungen den Erfordernissen entsprechend flexibel miteinander zu verbinden.

### Stand der Technik

Als Vorbenutzungsgegenstände sind zahlreiche Anschlussleisten bekannt, die sowohl als linien- als auch systemseitige Anschlussmodule verwendet werden können. Ferner sind unter der Bezeichnung "RXS" auf den Markt Systeme bekannt, bei denen die sogenannten Systemkabel, die von den Vermittlungseinrichtungen und dergleichen zu den systemseitigen Anschlussmodulen führen, mit Steckern vorkonfektioniert sind, so dass die Stecker in die systemseitigen Anschlussmodule eingesteckt werden können, wodurch die Adern des Systemkabels mit den Kontakten des Anschlussmoduls verbunden sind, an welche die Rangierleitungen angeschlossen werden können.

Aus der EP 0 765 091 A2 ist eine modulare Mehrfachanschlussleiste bekannt, bei der die Anschlussleisten sowohl der Linien- als auch der Systemseite mit den jeweiligen Adern vorkonfektionierbar sind und aneinanderliegend in einem Gestell montierbar sind. Hierdurch entsteht eine Mehrfachanschlussleiste derart, dass die Linien- und die Systemseite nicht räumlich voneinander getrennt sind. Dementsprechend ist nur für Sonderfälle vorgesehen, dass Rangierkabel angeschlossen werden müssen. Üblicherweise erfolgt die Verbindung zwischen Linien- und Systemseite bei dem beschriebenen System durch eine einfache Brücke, die sich von dem einen Anschlussmodul zu den unmittelbar daran anliegend angebrachten anderen Anschlussmodul erstreckt. An der Rückseite der systemseitigen Anschlussleiste sind Abgreifkontakte für Überspannungsschutzbauteile vorgesehen.

### Darstellung der Erfindung

Der Erfindung liegt die Aufgabe zugrunde, ein systemseitiges Anschlussmodul für die Telekommunikationstechnik zu schaffen, das möglichst einfach aufgebaut ist und den Anforderungen, die an der Systemseite vorliegen, mit möglichst wenig Aufwand lösen kann und darüber hinaus weiterhin eine räumliche Trennung zwischen Linien- und Systemseite in dem damit bestückten Verteiler ermöglicht. Die Lösung dieser Aufgabe erfolgt durch das im Patentanspruch 1 beschriebene Anschlussmodul.

Demzufolge ist das erfindungsgemäße Anschlussmodul unmittelbar in Form eines Kabelsteckers ausgebildet. Hierdurch ist das neuartige Anschlussmodul mit den Adern des Systemkabels vorkonfektionierbar. Mit anderen Worten entspricht das erfindungsgemäße Anschlussmodul zum einen dem herkömmlichen Anschlussmodul, da es unmittelbar an einem Trägersystem der Telekommunikationstechnik anbringbar ist. Zum anderen bildet es einen Kabelstecker, da es vorkonfektioniert als das Ende eines Systemkabels vorgesehen werden kann. Anders als bei den bekannten RXS-Kabelsteckern wird der erfindungsgemäße Kabelstecker jedoch nicht in ein getrenntes Anschlussmodul eingesteckt, sondern bildet gewissermaßen bereits das Anschlussmodul, das an das Trägersystem anbringbar und mit den Rangierkabeln bestückbar ist, sobald der Kabelstecker an das Trägersystem angebracht ist.

Gemäss der Erfindung ist ferner vorgesehen, dass der Kabelstecker, der das Anschlussmodul bildet, durchgehende Kontaktelemente aufweist. Hierunter wird verstanden, dass weder eine Trennstelle noch ein Abgriff für einen Überspannungsschutz vorgesehen ist. Hierdurch wird das systemseitige Anschlussmodul auf die wesentlichen Elemente reduziert und weist, beispielsweise im Gegensatz zu dem Gegenstand der oben erwähnten EP 0 765 091 keine auf der Systemseite zusätzlichen Merkmale, wie Trennstellen und Überspannungsabgriff auf. Die beschriebenen durchgehenden Kontaktelemente erlauben eine einreihige Gestaltung hinsichtlich der Anschlusskontakte. Insbesondere weisen diese in einem in Anbringstellung vorderen Bereich eine Reihe von Schneidklemmkontakten auf, an welche jeweils die Rangierleitungen anschließbar sind.

Im Gegensatz zu einem herkömmlichen Anschlussmodul, bei dem die von den Vermittlungseinrichtungen kommenden Adern des Systemkabels ebenfalls an der Vorderseite angeschlossen werden, kann dies bei dem erfindungsgemäß als Kabelstecker ausgebildeten Anschlussmodul in vorkonfektionierter Art und Weise an der Rückseite geschehen, so dass das Anschlussmodul insgesamt eine geringere Baugröße aufweist, und der für die Systemseite des Verteilers benötigten Platz in vorteilhafter Weise verringert werden kann. Schließlich kann bei dem erfindungsgemäßen Anschlussmodul auf das sogenannte Auflegen der Systemseite verzichtet werden. Die Erfindung sorgt folglich für ein kleines und einfach aufgebautes Anschlussmodul, das insbesondere vor Ort wenig Aufwand verursacht und den gestellten Anforderungen gerecht wird. Alternativ ist es jedoch denkbar, dass die Adern des Systemkabels erst vor Ort an den erfindungsgemäßen Kabelstecker angeschlossen werden. Hierzu wird ein geeignetes Werkzeug verwendet, so dass die Erfindung auch in dieser Ausführungsform für einen anforderungsgerechten und kompakten Kabelstecker sorgt, der als Anschlussmodul verwendet wird.

Bevorzugte Weiterbildungen der Erfindung sind in den weiteren Ansprüchen beschrieben.

Für das Anschlussmodul ist eine zweiteilige Gestaltung vorteilhaft, bei der für den Anschluss der Adern des Systemkabels ein sogenannter Kabelanschlussbereich vorgesehen ist, der über geeignete Kontakte mit einem sogenannten Aufnahmebereich für Rangierkontakte verbindbar ist, der dem Anschluss der Rangierkabel dient. Unabhängig von dem Aufnahmebereich kann hierbei zumindest der Kabelanschlussbereich als Endabschnitt eines Systemkabels vorkonfektioniert werden.

Für den vorangehend beschriebenen Fall wird bevorzugt, dass der Kabelanschlussbereich an einem Trägersystem der Telekommunikationstechnik anbringbar ist, und der Aufnahmebereich, insbesondere von vorne, auf den Kabelanschlussbereich aufgesteckt wird. Hierdurch reduziert sich dasjenige Element, das dem Anschluss der Rangierkabel dient, auf ein einreihig mit Kontakten bestücktes Modul, das auf den vorkonfektionierbaren Anschlussbereich über geeignete Kontakte aufsteckbar ist.

Die Vorteile des erfindungsgemäßen Anschlussmoduls lassen sich besonders umfangreich dadurch realisieren, dass ein Verteiler der Telekommunikationstechnik mit mehreren derartigen Anschlussmodulen bestückt wird, die von der Linienseite des Verteilers räumlich getrennt sind. Hierdurch bleiben die Vorteile einer räumlichen Trennung zwischen Linien- und Systemseite, im Gegensatz zu den bekannten Mehrfach- Anschlussleisten, erhalten. Insbesondere kann flexibel zwischen Linien- und Systemseite rangiert werden. Gleichwohl erfüllt das erfindungsgemäße Anschlussmodul sämtliche Anforderungen, die an der Systemseite des Verteilers vorliegen. Die sich durch die Vielzahl der verwendeten Anschlussmodule summierende Einsparung im Hinblick auf die Baugröße kann wirksam zu einer Verkleinerung des für die Systemseite insgesamt benötigten Raumes genutzt werden. Hierbei kann ein Überspannungsschutz in vorteilhafter Weise an den jeweiligen Anschlussmodulen der Linienseite vorgesehen werden. Wie erwähnt, sind die Kontaktelemente des erfindungsgemäßen systemseitigen Anschlussmoduls durchgehend und weisen keinen Überspannungsabgriff auf. Vielmehr ist dieser bei dem erfindungsgemäßen Verteiler jeweils an der Linienseite vorgesehen, so dass der Schutz gewissermaßen an einer möglichst weit an der "Außenseite" des Verteilers gelegenen Stelle erfolgt, und die Systemseite von Überspannungsschutzeinrichtungen freigehalten wird.

Ferner vermeidet die Möglichkeit einer Vorkonfektionierung der systemseitigen Anschlussmodule in Form von Kabelsteckern das herkömmlich erforderliche Auflegen der Systemseite. Schließlich bietet die beibehaltene räumliche Aufteilung zwischen Linien- und Systemseite den erheblichen Vorteil, dass die Anschlussmodule auf der Systemseite getrennt nach Anschaltungsart, beispielsweise getrennt zwischen ISDN und analog, sowie nach dem Umfang der in Anspruch genommenen Leistungen, beispielsweise zwischen häufig- und in geringerem Umfang telefonierenden Teilnehmern getrennt wird.

### Kurze Beschreibung der Zeichnungen

Nachfolgend wird die Erfindung anhand von beispielhaft in den Zeichnungen dargestellten Ausführungsformen näher erläutert.
Es zeigen:
- Figur 1: eine schematische perspektivische Ansicht einer ersten Ausführungsform des erfindungsgemäßen Anschlussmoduls; und
- Figur 2: eine perspektivische Ansicht einer zweiten Ausführungsform des erfindungsgemäßen Anschlussmoduls.

### Ausführliche Beschreibung bevorzugter Ausführungsformen der Erfindung

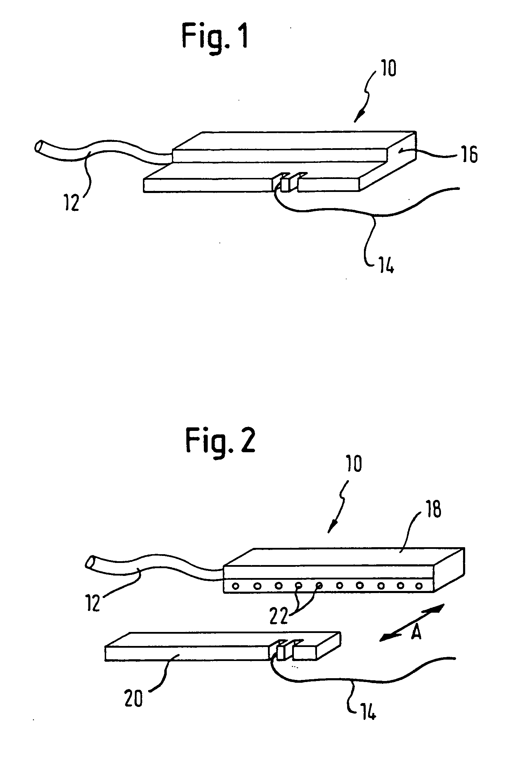

In Figur 1 ist das erfindungsgemäße Anschlussmodul 10 in einer einteiligen Gestalt gezeigt. Das Anschlussmodul 10 ist als vorkonfektionierbarer Kabelstecker gestaltet, an den - in dessen Anbringstellung rückwärtigen Bereich - die Adern eines Systemkabels 12 anschließbar sind. Es sei jedoch angemerkt, dass die Ader des Systemkabels 12 auch von einer der beiden Seiten her, also gemäß Figur 1 von links oder von rechts, anstelle des rückwärtigen Anschlusses anschließbar sein können. Schließlich kann das erfindungsgemäße Anschlussmodul derart gestaltet sein, dass es an allen drei genannten Seiten einen Durchgang für das Systemkabel aufweist, so dass erst im Rahmen des Anschlusses der Adern des Systemkabels die Entscheidung zu treffen ist, in welche Richtung das Systemkabel von dem Anschlussmodul 10 weggeführt wird.

Bei dem gezeigten Beispiel führen von dem rückwärtigen Bereich durchgehende Kontaktelemente zu dem vorderen Bereich, an dessen Schneidklemmkontakten, Rangierkabel 14 anschließbar sind, von denen in der Figur nur eines gezeigt ist. An den seitlichen Schmalseiten 16 des Anschlussmoduls 10 befinden sich (nicht gezeigte) Anbringeinrichtungen für die Anbringung des Anschlussmoduls 10 an einem Trägersystem der Telekommunikationstechnik.

Figur 2 zeigt das erfindungsgemäße Anschlussmodul in einer zweiteiligen Ausführungsform, bei der ein Kabelanschlussbereich 18 von einem Aufnahmebereich 20 getrennt ist. Entsprechend der Ausführungsform von Figur 1 sind in einem in Anbringstellung hinteren Bereich des Kabelanschlussbereichs 18 die Adern des Systemkabels 12 anschließbar. Hierdurch kann das Systemkabel 12 zumindest mit dem Kabelanschlussbereich 18, (bei der Ausführungsform von Figur 1 mit dem gesamten Kabelstecker) vorkonfektioniert werden, der das Anschlussmodul 10 bildet. Bei der Ausführungsform von Figur 2 erfolgt die Verbindung mit dem Aufnahmebereich 20 für den Anschluss von Rangierkabeln 14 über geeignete Kontakte, die an dem Kabelanschlussbereich mit 22 angedeutet sind. Durch Verschieben der beiden Komponenten zueinander in Richtung des Pfeils A werden diese zu dem erfindungsgemäßen Anschlussmodul 10 zusammengesetzt.

Das Anschlussmodul kann ferner mit seitlich ausgebildeten Drahtführungsösen für die Rangierleitungen 14 versehen sein. Alternativ kann eine der horizontalen Oberflächen mit sogenannten Drahtführungsscheiben ausgestattet sein, in denen sich Kanäle befinden, welche die Rangierleitungen aufnehmen.

## Patentansprüche

1. Systemseitiges Anschlussmodul (10) der Telekommunikationstechnik in Form eines Kabelsteckers, der an ein Trägersystem der Telekommunikationstechnik anbringbar ist und durchgehende Kontaktelemente aufweist, an die zum einen insbesondere vorkonfektionierbar, Adern eines Systemkabels (12) anschließbar sind, und die zum anderen in einem in Anbringstellung vorderen Bereich Schneidklemmkontakte aufweisen, an die Rangierkabel (14) anschließbar sind.

2. Systemseitiges Anschlussmodul nach Anspruch 1,
**dadurch gekennzeichnet, dass** dieses zweiteilig ist, wobei ein Kabelanschlussbereich (18) für den Anschluss der Adern des Systemkabels (12) vorgesehen ist, der über geeignete Kontakte (22) mit einem Aufnahmebereich (20) verbindbar ist, der dem Anschluss der Rangierkabel (14) dient.

3. Systemseitiges Anschlussmodul nach Anspruch 2,
**dadurch gekennzeichnet, dass** der Kabelanschlussbereich (18) an einem Trägersystem der Telekommunikationstechnik anbringbar ist.

4. Verteiler der Telekommunikationstechnik mit mehreren systemseitigen Anschlussmodulen (10) nach zumindest einem der vorangehenden Ansprüche,
die von den linienseitigen Anschlussmodulen räumlich getrennt sind.

## Claims

1. System-side connecting module (10) in telecommunications engineering in the form of a cable plug, which can be attached to a carrier system in telecommunications engineering and has continuous contact elements, to which cores of a system cable (12) can firstly be connected, in particular in such a way that they can be prefabricated, and which secondly have insulation displacement contacts in a region which is at the front in the attachment position, to which insulation displacement contacts jumper cables (14) can be connected.

2. System-side connecting module according to Claim 1, **characterized in that** it is in two parts, a cable connecting region (18) for connecting the cores of the system cable (12) being provided which can be connected, via suitable contacts (22), to an accommodating region (20), which is used for connecting the jumper cables (14).

3. System-side connecting module according to Claim 2, **characterized in that** the cable connecting region (18) can be attached to a carrier system in telecommunications engineering.

4. Distribution board in telecommunications engineering with a plurality of system-side connecting modules (10) according to at least one of the preceding claims which are physically separated from the line-side connecting modules.

## Revendications

1. Module (10) de raccordement au système dans la technique des télécommunications, qui présente la forme d'une fiche de câble qui peut être placée sur un système de support dans la technique des télécommunications et qui présente des éléments continus de contact auxquels d'une part on peut connecter des fils, en particulier aptes à être préconfectionnés, d'un câble système (12) et qui d'autre part présentent dans une partie située en avant en position d'installation des contacts à pinces coupantes sur lesquels des câbles (14) à fiche peuvent être raccordés.

2. Module de connexion système selon la revendication 1, **caractérisé en ce qu'**il est réalisé en deux pièces et **en ce qu'**une partie (18) de raccordement de câble est prévue qui permet de raccorder les fils du câble système (12) et qui peut être reliée par des contacts (22) appropriés à une partie de réception (20) qui sert à raccorder les câbles (14) à fiche.

3. Module de connexion système selon la revendication 2, **caractérisé en ce que** la partie (18) de raccordement de câble peut être installée sur un système de support de la technique des télécommunications.

4. Répartiteur de la technique des télécommunications, qui présente plusieurs modules de connexion système (10) selon au moins l'une des revendications précédentes et séparés spatialement par les modules de connexion côté lignes.
